# EUROPEAN PATENT APPLICATION

(11) **EP 1 527 864 A1**
(43) Date of publication of application: **04.05.2005**
(21) Application number: 03405781.0
(22) Date of filing: 30.10.2003
(51) Int. Cl.: B29C 31/04, B29C 43/18, B29C 43/34, B29C 31/06, B29C 43/42, B29C 70/80

(54) **Device for producing a ring-shaped body**

(71) Applicant: PackSys Global (Switzerland) Ltd., 3414 Oberburg (CH)
(72) Inventor: Angst Roman, 8050 Zürich (CH)
(74) Representative: Roshardt, Werner Alfred, Dipl.-Phys.

(57) **Abstract**

A device for producing a ring-shaped body, comprises a preforming unit (200) with a ring nozzle (220) for producing a ring-shaped preform (410) by extruding a thermoplastic material, a stripper (113) for stripping off the preform (410) and a forming tool (111) for forming the ring-shaped body by compressing the preform (410) against a counterpart element (300, 400) into a desired profile. The ring-shaped body is produced by first producing a ring-shaped preform (410) by extruding a thermoplastic material through the ring nozzle (220), stripping off the preform (410) from the ring nozzle (220) and forming the ring-shaped body by compressing the preform (410) against a counterpart element (300, 400) into a desired shape. The ring nozzle (220) allows for a fast production of an even, ring-shaped preform (410) by simultaneously forming the ring along its entire circumference. Because of the ring nozzle (220), mechanically complex rotating parts such as a rotating dispensing head are not required. The stripper (113) ensures that the preform (410) is fully and evenly detached from the ring nozzle (220) with no material remaining that could block the nozzle (220). Due to the forming tool (111) the stripped-off preform (410) can immediately be compressed to obtain its final form, depending on the shape of the forming tool (111) and the counterpart element (300, 400). As no reheating of the preform (410) is required, the construction of the device is simplified.

## Description

### Technical Field

The invention relates to a device for producing a ring-shaped body from a thermoplastic material and to a method for producing a ring-shaped body from a thermoplastic material.

### Background Art

Ring-shaped bodies, produced by extruding a thermoplastic material are widely used, for instance as gaskets or other liners arranged in closures for beverage bottles, wide-mouth bottles, jars etc. Another application are ring-shaped closure elements, i. e. closures having a continuous hole as used for instance in so called "sports bottles" or head pieces of tubes.

US patent 5,686,040 (White Cap, Inc.) discloses two different methods for producing ring-shaped closure gaskets, wherein the gasket material is first placed in the closure and subsequently reformed to obtain a desired geometry. According to the first method, a hotmelt gasket material is dispensed into an invertedly arranged closure by a dispensing head while the closure is rotated beneath the head. This leads to deposit of a ring-shaped strand of material whereby the ends of the strand overlap. During subsequent rotation of the closure the extruded ring is compressed and partially formed by a flattening roller. According to the second method a preformed gasket liner is inserted into the closure and heated. Finally, in both methods the material is formed in a subsequent reformer station containing a compression punch.

The known methods for producing ring-shaped bodies require a complex sequence of separate steps and are time-consuming. Either the ring is formed during rotation of a closure which calls for a precise positioning and clamping of the rotating closure in order to produce a preform having the desired shape, arranged at the right place. Furthermore, the production of the preform using the dispensing head and subsequently forming the gasket by first flattening and then punching the preform needs much time. Similarly, externally preforming a gasket liner and reheating the preform after insertion into the closure is time-consuming and requires a plurality of devices for preforming, inserting, heating and finally punching.

### Summary of the invention

It is the object of the invention to create a device pertaining to the technical field initially mentioned, that facilitates producing of a ring-shaped body, reduces time need and is compact and of simple construction.

The solution of the invention is specified by the features of claim 1. According to the invention the device comprises:
a) a preforming unit comprising a ring nozzle for producing a ring-shaped preform by extruding the melted thermoplastic material;
b) a stripper for stripping off the preform; and
c) a forming tool for forming the ring-shaped body by compressing the preform against a counterpart element into a desired profile.

The ring nozzle allows for a fast production of an even, ring-shaped preform by simultaneously forming the ring along its entire circumference. The nozzle outlet is substantially ring-shaped and consists of a single continuous nozzle having a circular opening or of a plurality of closely spaced nozzles arranged along a circle or polygon. The preform produced by the ring nozzle does not show any transition regions, where e. g. strands forming the ring overlap. Therefore, possible weak spots and weld lines are eliminated. Because of the ring nozzle, mechanically complex rotating parts such as a rotating dispensing head are eliminated. The stripper ensures that the preform is fully and evenly detached from the ring nozzle such that no material remains that could block the nozzle. Due to the forming tool the stripped-off preform can immediately be compressed to obtain its final form, depending on the shape of the forming tool and the counterpart element. As no reheating of the preform is required, the construction of the device is further simplified.

Preferentially, the device further comprises a conveyor for inserting the preform into the counterpart element. This allows for initially free forming the ring-shaped perform, unhindered by the counterpart element. The conveyor ensures a fast promotion of the freshly produced preform into the counterpart element, without a substantial fall of temperature. This ensures that the inserted preform is still in a formable state and, if desired, its temperature is still high enough to allow for adherence of the ring-shaped body to the counterpart element. In that case a surface layer of the counterpart element is temporarily melted as a result of the contact by the hot preform.

Alternatively, the preform is produced directly inside the counterpart element, the ring nozzle being inserted into the element, thereby minimizing the complexity of the device, omitting the conveyor.

Advantageously, the stripper, the conveyor and the forming tool are integrated into a single unit. This provides for a most compact construction of the device and ensures that the different parts precisely match up.

Alternatively, single units may be provided for the three mentioned parts of the device or only two of the parts may be combined into one unit.

Preferably the stripper, the conveyor and the forming tool are arranged coaxially in said unit and the stripper and/or the forming tool are movable in an axial direction relative to the conveyor. The coaxial, substantially axially symmetric arrangement is adapted to the circular form of the body to be produced and allows for a compact construction of the device.

Advantageously, the stripper and/or the conveyor arranged coaxially with the forming tool are supported by the forming tool and springs are arranged in between the stripper and the conveyor and/or in between the forming tool and the conveyor. The springs exert defined forces in order to compress the preform. Furthermore, once the first of the coaxially arranged parts of the device has reached the counterpart element the remaining parts may be further advanced in the axial direction by overcoming the spring forces between said first part and the other parts. It is thus not necessary to individually control the motion of each of the parts by individual drives.

Preferentially, the stripper and/or conveyor and/or forming tool comprise a cooling system for cooling a contact region with the preform in order to prevent bonding of the preform. Thereby it is ensured that the preform passes from the stripper to the conveyor and from there to the forming tool. Finally, the forming tool may be easily separated from the ring-shaped body. The cooling system may be formed such that the cooling power is dynamically controllable, i. e. during the production of a ring-shaped body the temperature of the stripper and/or conveyor and/or forming tool is varied, according to the actual stage of the process. Alternatively, the cooling power remains substantially constant during operation of the device.

Parts not having a cooling system are preferably built of or coated by an antiadhesive material.

Preferably, the stripper is arranged such as to open and close the ring nozzle. Thus, a separate active closure for the nozzle or a means for intermittent injection of the thermoplastic material is saved.

Preferably, the forming tool comprises a central punch for preventing the extruded material from entering a central region of the counterpart element. If for example a ring-shaped gasket is formed, it is not desired that a central region is coated by a film of the gasket material. Firstly, excess material is consumed and secondly, in certain cases such as drug packaging, a central film must not be formed in order to prohibit chemical reactions of the gasket material with the content of the packaging. If a ring-shaped body with a hole is formed such as a closure for a sports bottle or a head piece for a tube, a film would at least partially cover the hole such that an additional tool for removing the film would be required. These problems can be avoided by tightly pressing the central punch against a contact surface of the counterpart element (i. e. a closure, a mold form etc.), corresponding to the hole region, before the actual forming takes place.

Advantageously, the counterpart element is held by a spring loaded support. This allows for adjusting tolerances if the counterpart element is replaced. Furthermore, based on the displacement of the spring loaded support during the operation of the device, failures during the production of the ring-shaped body may be detected, e. g. if the preform is not correctly inserted into the counterpart element.

Alternatively, the device may comprise sensors for sensing the counterpart element and/or failures and drivers that are able to adjust the movements of the parts of the device accordingly.

Preferably, the ring nozzle is arranged in a substantially cylindrical wall and the thermoplastic material is extruded in a substantially perpendicular direction relative to the wall. The outlet of the nozzle may be arranged in the inside wall of a cylindrical cavity, the extrusion direction pointing inwards or in the outside wall of a cylindrical body, the extrusion direction pointing outwards along the nozzle outlet. As such, these arrangements allow for a rotationally symmetric creation as well as further handling and processing of the extruded ring. In the context of the inventive device these arrangements are particularly advantageous because the stripper, the conveyor and the forming tool may be arranged inside the cylindrical cavity or enclosing the cylindrical body and after extrusion handle the preform, in a rotationally symmetric way and unhampered by the ring nozzle.

Alternatively, the nozzle may be arranged e. g. as a circular opening in a flat wall.

Advantageously, the preforming unit comprises two substantially torus shaped chambers connected by a connector nozzle, where the thermoplastic material is introduced in a first of said chambers and where the ring nozzle to produce the ring-shaped preform is connected to a second of said chambers. The ring-shaped chambers lead to an even distribution of the thermoplastic material and to an even pressure of the material at the ring nozzle outlet. Therefore the produced preform has an even shape, having a cross section substantially constant along its circumference.

Alternatively, other means for ensuring an even distribution may be provided, e. g. a feeder inserting the thermoplastic material by a plurality of access ways along the circumference of the ring nozzle combined with only a single chamber coupled to the ring nozzle.

Preferentially, the preforming unit comprises a heater for maintaining a temperature of the thermoplastic material. The material is fed into the preforming unit in a thermoplastic state, i. e. heated to a given temperature. The heater allows for controlling the respective thermoplastic properties of the material in order to obtain consistent quality preforms.

In an advantageous application of the invention the counterpart element comprises a carrier for holding a receptacle, such that the preform is compressed against the receptacle. Thereby, in particular a liner, preferentially a gasket, in a closure may be produced. Closures such as screw caps made of plastic (e. g. polyethylene, polypropylene etc.) or metal are widely used for containers such as bottles, wide-mouth bottles or jars. In order to prohibit air entering the container or the content flowing out, a gasket has to be arranged in between the closure and the container. The gasket is usually attached to the closure. In many cases, e. g. if the container contains drugs, the gasket material should not contact the content. Therefore, it is essential to provide a gasket that does not extend over essentially the whole inner surface of the closure but is restricted to a ring-shaped region contacting the neck of the bottle or jar. Besides, in all cases material requirements are reduced for a liner that is ring-shaped.

The preform is introduced into the closure in its thermoplastic state, having a high temperature. Therefore, compression of the preform simultaneously leads to forming the gasket and to adhering the gasket to the closure by melting the uppermost layer of the inner surface of the closure. In the case of metal closures, a fusible lacquer applied to the inner surface, prior to the production of the gasket allows for the same mechanism of adhesion.

In another advantageous application of the invention the counterpart element is a mold form for forming a closure element having a continuous hole. Such closure elements are especially used in so-called sports bottles having a push-pull lid. Head pieces of tubes are another example of closure elements usually having a continuous hole. Direct molding of such a closure element avoids the need for a separate drilling or perforating step in order to obtain the hole.

A method for producing a ring-shaped body from a thermoplastic material comprises the steps of:
a) producing a ring-shaped preform by extruding the melted thermoplastic material through a ring nozzle;
b) stripping off the preform from the ring nozzle; and
c) forming the ring-shaped body by compressing the preform against a counterpart element into a desired shape.

Advantageously, after stripping off, the preform is conveyed into the counterpart element.

Preferably, a tool for stripping off and conveying the preform and for forming the ring-shaped body is alternately moved between two end positions. In an upper dead center the ring-nozzle is uncovered by the tool such that the preform is produced and in a lower dead center (in which the ring-nozzle is covered by the tool) the preform is compressed.

Other advantageous embodiments and combinations of features come out from the detailed description below and the totality of the claims.

### Brief description of the drawings

The drawings used to explain the embodiments show:
- Fig. 1: A first device for producing a ring-shaped body according to the invention, in the upper dead center position;
- Fig. 2: the device in a middle position;
- Fig. 3: the device in the lower dead center position;
- Fig. 4: a second device for producing a ring-shaped body according to the invention.

In the figures, the same components are given the same reference symbols.

### Preferred embodiments

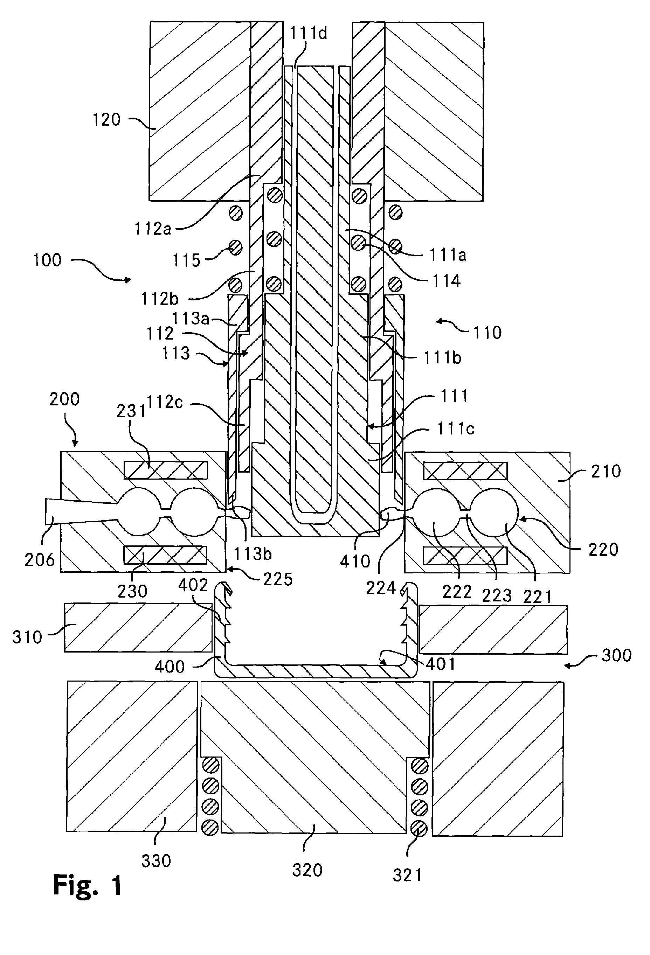

Figure 1 is a schematic representation of a first device for producing a ring-shaped body according to the invention, in the upper dead center position. Displayed is a cross-section in a vertical plane including the central axis of the device, which is substantially rotationally symmetric. The device comprises a tool section 100, a nozzle section 200 and a counterpart section 300. The tool section 100 is constituted by a combined slitting, inserting and forming tool 110 and a guide shaft 120 guiding an upper part of the tool 110. The core of the tool 110 is made up by an inner punch 111 featuring three coaxial cylindrical sections 111a, 111b, 111c, whose diameters increase from top to bottom. Inside the inner punch 111 a cooling duct 111d is leading from the top section 111 a through middle section 111b to the bottom section 111c and back. The duct 111d allows for maintaining a given temperature of the inner punch 111.

The outer punch 112 is attached to the guide shaft 120 and slidably supported on the inner punch 111. The outer punch 112 is constituted by three sections 112a, 112b, 112c having increasing diameters from top to bottom such that each section 112a, 112b, 112c of the outer punch 112 rests on an outer surface of the corresponding section 111a, 111b, 111c of the inner punch 111. In the upper dead center position displayed in Figure 1 the sections 112a, 112b, 112c of the outer punch 112 are all offset a certain distance up relative to the sections 111a, 111b, 111c of the inner punch 111, such that the inner punch 111 is clearly offset of the outer punch 112.

Slidably supported by the middle section 112b and the bottom section 112c of the outer punch 112 is a stripping sleeve 113 which has a substantially ring shaped cross section and features a bold section 113a at its top and a blade-like section 113b at its bottom end. In the upper dead center position the stripping sleeve 113 rests with its bold section 113a immediately on the step between the lower section 112c and the middle section 112b of the outer punch 112, therefore the stripping sleeve 113 is as well offset of the outer punch 112.

A spiral spring 114 is arranged coaxially with the other elements between the step formed by the transition between the middle section 111b and the top section 111a of the inner punch 111 and the step formed by the transition between the middle section 112b and the top section 112a of the outer punch 112. Another coaxial spiral spring 115 is arranged between the bold section 113a of the stripping sleeve 113 and the lower end of the guide shaft 120.

The nozzle section 200 comprises a ring-shaped housing 210 in which a ring nozzle 220 and heaters 230, 231 are arranged. The ring nozzle 220 is constituted by two substantially torus-shaped cavities 221, 222, having circular cross-sections, arranged coaxially in a common horizontal plane. The cavities 221, 222 are connected by a ring-shaped connector nozzle 223 having a width that is substantially smaller than the diameter of the cavities 221, 222. The innermost part of the ring nozzle 220 is constituted by a ring-shaped outlet 224 formed as a ring-shaped opening in the inner wall of the housing 210. At a certain angular position, the ring nozzle 220 features a feed opening where liquid thermoplastic material such as polypropylene or polyethylene etc. is fed at a temperature of 140-280 °C, preferably about 210-230 °C and at a given constant pressure.

Due to the geometry of the ring nozzle 220, having two subsequent chambers formed by the cavities 221, 222 and connected by the narrow connector nozzle 223 the thermoplastic material is evenly distributed in the inner cavity 222 and therefore evenly extruded through the ring-shaped outlet 224. The heaters 230, 231 are ring-shaped coils or heating cartridges and arranged above and below on both sides of the cavities 221, 222, parallel to their horizontal plane. This arrangement provides for an even distribution of the heating power.

The counterpart section 300 comprises a holder 310 for tightly holding a closure 400 as well as a support 320 for the closure 400. The support 320 is spring-loaded in the vertical direction by means of a spring 321 and guided in a guide shaft 330. The closure is arranged in an inverted position, i. e. its side wall 402 is pointing up and its inner surface 401 faces the tool 110.

The device being positioned in the upper dead center, the outlet 224 of the ring nozzle 220 is not covered, such that thermoplastic material is extruded through the outlet 224 and forms a ring-shaped preform 410 in between the wall 225 of the housing 210 of the nozzle section 200 and the inner punch 111 of the tool section 100. As mentioned, the outer punch 112 and the sleeve 113 are retracted relative to the inner punch 111.

Starting from the situation displayed in Figure 1, the guide shaft 120 is lowered. This leads to lowering of the outer punch 112 attached to the guide shaft 120 and due to the springs 114, 115 simultaneously to the lowering of the inner punch 111 as well as the stripping sleeve 113. During the lowering movement the offset of the stripping sleeve 113 and the inner punch 111 relative to the outer punch 112 is substantially kept. Therefore, due to the springs 114, 115, separate drives for the three coaxial elements of the tool 110 are not required. The preform 410 is separated from the outlet 224 of the ring nozzle 220 by the blade-like section 113b of the sleeve 113, held in between the three coaxial elements of the tool 110 and moved downwards.

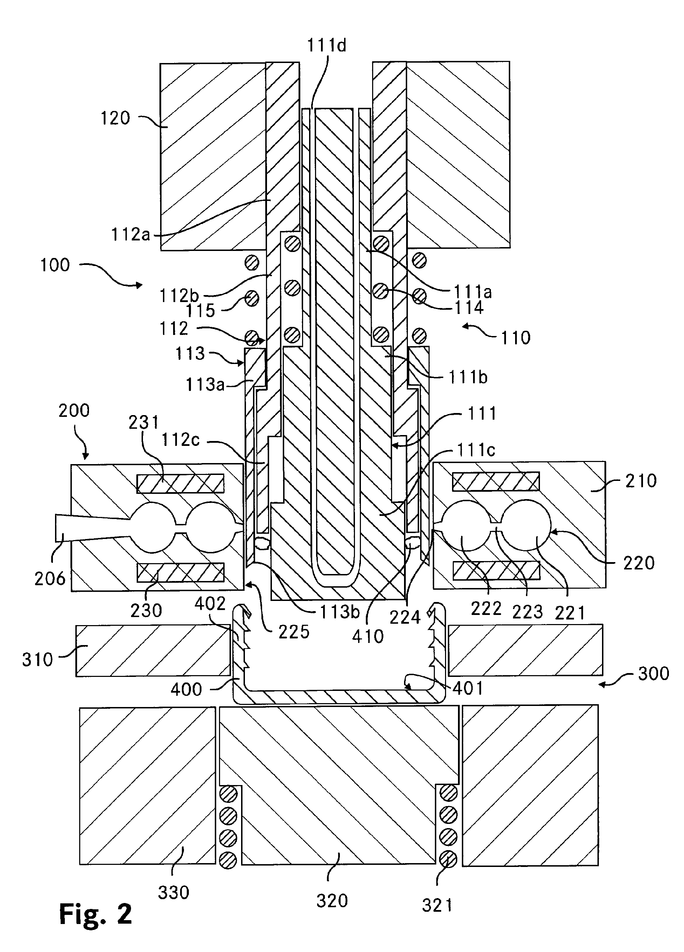

Figure 2 is a schematic representation of the inventive device in a middle position reached by the steps mentioned above. The outer punch 112 is still retracted relative to the sleeve 113 and the inner punch 111. Furthermore, the outlet 224 of the ring nozzle 220 is closed by the sleeve 113 as soon as the preform 410 is separated from the wall 225 of the housing 210 of the nozzle section 200. The outlet 224 stays covered until the tool 110 is risen during preparation for the next production cycle.

The downward movement of the inner punch 111, the outer punch 112 and the sleeve 113 continues until the most prominent element, the inner punch 111, reaches the inner surface 401 of the closure 400. It thereby prohibits entering of any material in a middle circular section of the inner surface 401. The guide shaft 120 together with the outer punch 112 is further lowered against the increasing spring force exerted by the spring 114 arranged between the now resting inner punch 111 and the outer punch 112. Simultaneously, the sleeve 113 is lowered due to the spring 115 until the blade-like section 113b reaches the inner surface 401 and defines the outer limit of the cavity built in between the inner punch 111, the outer punch 112, the sleeve 113 and the closure 400.

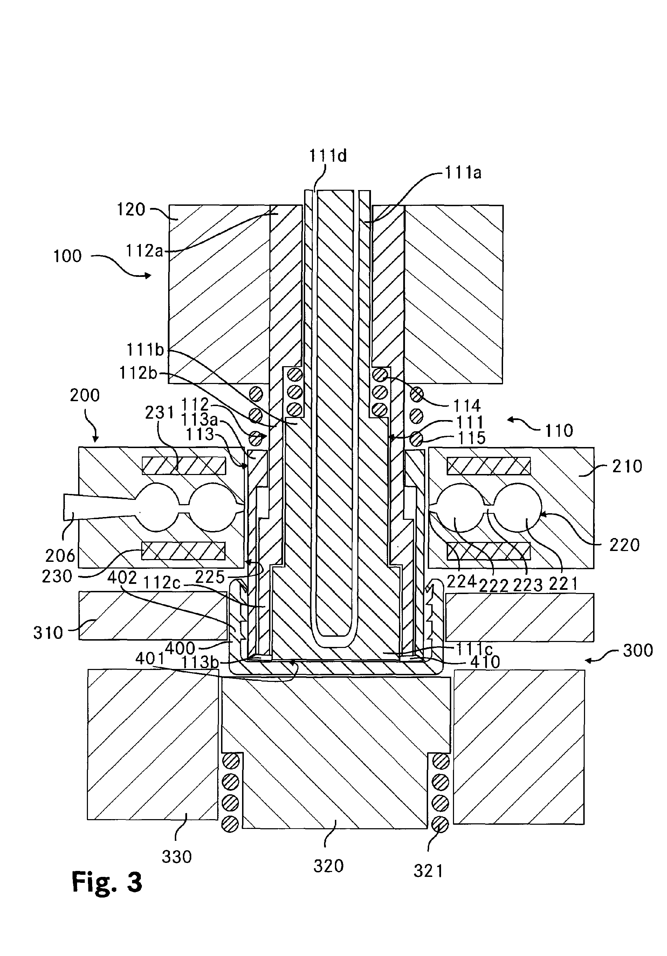

Figure 3 is a schematic representation of the inventive device in the lower dead center position. This position is reached by finally lowering exclusively the outer punch 112 until an offset remains relative to the inner punch of about 0.8 mm, corresponding to the thickness of the ring-shaped body to be produced. Thereby, the preform 410 is completely lowered and compressed against the inner surface 401 of the closure 400 until a gasket of the desired profile is formed, defined by the limiting surfaces of the elements of the tool 110. Due to the rapid transportation of the freshly produced preform 410 into the closure 400, at this stage the temperature of the preform 410 is still at about 80-90% of the melt temperature. Therefore, in a contact region of the inner surface 401 of the closure 400 and the hot preform 410 an upper layer of the material of the inner surface 401 is melted and the gasket adheres to the closure 400.

As soon as the desired shape is reached and adhesion has taken place the inner punch 111 is cooled by guiding a cooling liquid through the cooling channel 111d of the inner punch 111. This leads to solidification of the ring-shaped body such that the tool 110 may be retracted from the closure 400.

Next, during retraction of the tool 110 the closure 400 is removed from the holder 310 and a new closure is inserted into the holder 310 by a star wheel or other transportation means known as such. As soon as the tool 110 has moved above the outlet 224 of the ring nozzle 220 extrusion of a new preform can start.

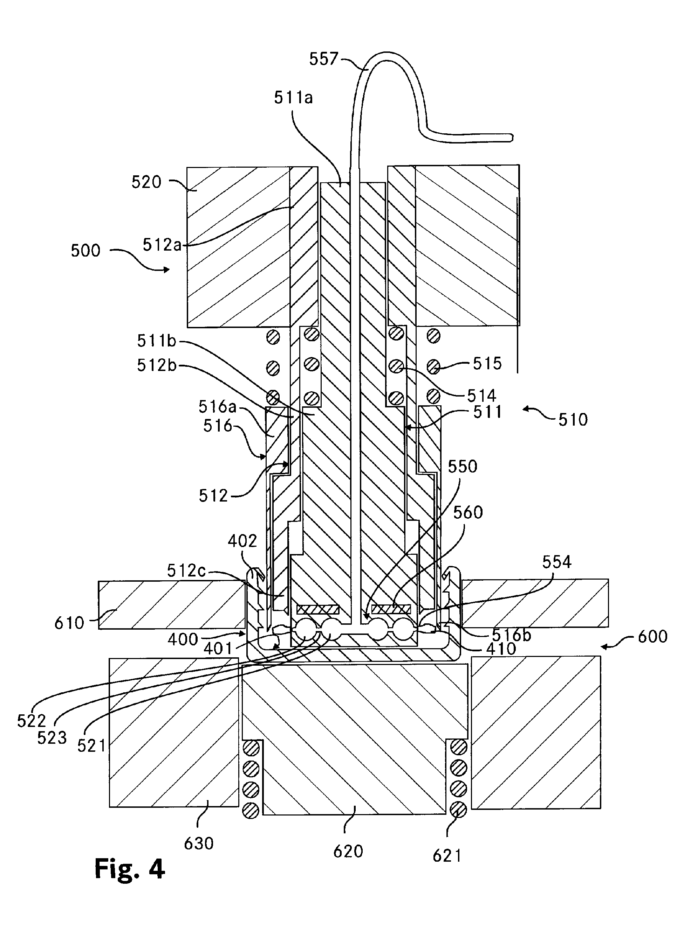

Figure 4 is a schematic representation of a second device for producing a ring-shaped body according to the invention. In contrast to the device displayed in Figures 1-3, the ring nozzle 550 is included in the tool section 500. The tool section 500 comprises a combined extruding, slitting, inserting and forming tool 510 and a guide shaft 520 guiding the upper part of the tool 510. The core of the tool 510 is again made up by an inner punch 511 featuring three coaxial cylindrical sections 511a, 511b, 511 c, whose diameters increase from top to bottom. Slidably supported by the inner punch 511 is an outer punch 512 which is a combined stripping sleeve and forming tool constituted by three sections 512a, 512b, 512c having increasing diameters from top to bottom such that each section 512a, 512b, 512c of the outer punch 512 rests on an outer surface of the corresponding section 511a, 511b, 511 c of the inner punch 511. In the position displayed in Figure 4 the sections 512a, 512b, 512c of the outer punch 512 are all offset a certain distance up relative to the sections 511a, 511b, 511c of the inner punch 511, such that the outer punch 512 is retracted relative to the inner punch 511. The bottom section 512c of the outer punch 512 features a blade-like end portion adjacent to the inner punch 511 and a punch portion corresponding to a desired profile of the gasket to be formed.

Slidably supported by the middle section 512b and the bottom section 512c of the outer punch 512 is a sealing tool 516 which has a substantially ring shaped cross section and features a bold section 516a at its top end and a contact section 516b at its bottom end. Coaxial spiral springs 514, 515 are arranged between the inner punch 511 and the outer punch 512 and between the sealing tool 516 and the lower end of the guide shaft 520.

The ring nozzle 550 and a heater 560 are integrated in the tool 510. For ensuring even distribution of the material to be extruded, the ring nozzle is constituted by two substantially torus-shaped cavities 551, 552 in the inner punch 511 having circular cross-sections and arranged in a common horizontal plane. The cavities 551, 552 are again connected by a ring-shaped connector nozzle 553 being substantially narrower than the cavities 551, 552. The outermost part of the ring nozzle 550 is constituted by a ring-shaped outlet 554 formed as a horizontal ring-shaped opening in the outer surface of the inner punch 511. The ring nozzle 550 is fed by thermoplastic material through a duct 556 arranged along the vertical axis of the inner punch 511 connected to a flexible hose 557 at the upper end of the inner punch 511. The heater 560 is ring-shaped and arranged above the cavities 551, 552, parallel to their horizontal plane.

The counterpart section 600 is built similarly to the counterpart section 300 displayed in Figures 1-3, comprising a holder 610 and a support 620 for holding and supporting the closure 400, a guide shaft 630 for guiding the support 620 and a spring 621 for pushing the support 620 together with the closure 400 in an upward direction. In contrast to the counterpart section 300 of the first device the counterpart section 600 allows for removing the closure 400 from the holder 610 without having to retract the tool 510, e. g. by retracting the spring-loaded support 620 until the closure 400 may be removed sideways.

In the position shown in Figure 4, the outlet 554 of the ring nozzle 550 is open such that thermoplastic material is extruded through the outlet 554. Thereby, a ring-shaped preform 410 is produced directly inside the closure 400, in the space between the inner punch 511 and the side wall 402 of the closure 400. During the production of the ring-shaped body, the inner punch 511 is tightly pressed against the inner surface 401 of the closure 400 such that no material is able to enter the middle circular section of the inner surface 401.

Next, the guide shaft 520 is lowered such that the inner punch 512 attached to the guide shaft 520 is moved downwards until the preform 410 is separated from the outlet 554 of the ring nozzle 550 by the blade-like end portion of the bottom section 512b of the outer punch 512. After that, the outer punch 512 and the sealing tool 516 are further simultaneously lowered until the contact section 516b of the sealing tool 516 reaches the closure 400 and prohibits liner material from entering an outer section of the inner surface 401 of the closure 400. Further lowering of the guide shaft 520 leads to compression of the preform by the punch portion of the outer punch 512.

In order to ensure solidification of the gasket and to prohibit bonding of the gasket to the elements of the tool 510 the punch section 512b of the outer punch 512 may be cooled by a cooling system (not displayed).

Next, the support 320 is retracted such that the closure 400 is removed from the tool 510 and a new closure may be inserted. At the same time the sleeve 513 as well as the outer punch 512 are retracted such that the opening 524 of the ring nozzle 520 is uncovered and extrusion of a new preform can start.

The geometry of the ring nozzle may be adapted to the extrudable material processed, the geometry of the device and the type and profile of the ring-shaped body to be produced. The ring nozzle may contain only a single chamber arranged prior to the nozzle itself or more than three chambers. A plurality of chambers may be arranged on different horizontal levels and the cross-section of the chambers may be other than circular. The cross-section of the connector nozzle(s) may be optimized in order to ensure a most even distribution of the thermoplastic material. Finally, also the geometry of the ring nozzle itself is variable in a wide range: alternatively, the ring nozzle may be composed of a large number of single nozzles having circular outlets, arranged side-by-side along a circle or it may be composed by several nozzles having rectangular closures, arranged along a polygon.

The profile of the formed liners is not restricted to the one described and displayed above. A large variety of different profiles is achievable by the invention, such as for gaskets for carbonated soft drinks (CSD) or hot-fill bottles.

The extrudable thermoplastic material may be chosen from a wide selection of materials including e.g. Nitrogen foamed polymers.

The inventive device may be used to produce closure elements having a continuous hole. In this case the counterpart element comprises a mold form which, together with the forming tool, defines the cross-section of the closure element formed from the extruded thermoplastic material.

Finally, a plurality of devices according to the invention may be defined in a single apparatus, either for parallel processing of a plurality of workpieces or for sequentially processing single workpieces by different operations (e. g. producing a closure element having a hole in a first device and subsequently inserting a gasket into the closure element in a second device).

In summary, it is to be noted that the invention creates a device that facilitates producing of a ring-shaped body, reduces time need and is compact and of simple construction.

## Claims

1. A device for producing a ring-shaped body from a thermoplastic material, comprising
a) a preforming unit (200; 500) comprising a ring nozzle (220; 550) for producing a ring-shaped preform (410) by extruding the melted thermoplastic material;
b) a stripper (113; 512) for stripping off the preform (410); and
c) a forming tool (111; 511) for forming the ring-shaped body by compressing the preform (410) against a counterpart element (300, 400; 600, 400) into a desired profile.

2. The device according to claim 1, further comprising a conveyor (112) for inserting the preform (410) into the counterpart element (300, 400; 600, 400).

3. The device according to claim 2, **characterized in that** the stripper (113), the conveyor (112) and the forming tool (111) are integrated into a single unit (100).

4. The device according to claim 3 **characterized in that** the stripper (113), the conveyor (112) and the forming tool (111) are arranged coaxially in said unit (100) and **in that** the stripper (113) and/or the forming tool (111) are movable in an axial direction relative to the conveyor (112).

5. The device according to claim 4, **characterized in that** the stripper (113) and/or the conveyor (112) are supported by the forming tool (111) and **in that** springs (114, 115) are arranged in between the stripper (113) and the conveyor (112) and/or in between the forming tool (111) and the conveyor (112).

6. The device according to one of claims 2 to 5, **characterized in that** the stripper (113) and/or conveyor (112) and/or forming tool (111) comprises a cooling system (111d) for cooling a contact region with the preform (410) in order to prevent bonding of the preform (410).

7. The device according to one of claims 1 to 6, **characterized in that** the stripper (113; 513) is arranged such as to open and close the ring nozzle (220; 550).

8. The device according to one of claims 1 to 7, **characterized in that** the forming tool (110; 510) comprises a central punch (111; 511) for preventing the extruded material from entering a central region of the counterpart element (400).

9. The device according to one of claims 1 to 8, **characterized in that** the counterpart element (300, 400; 600, 400) is held by a spring loaded support (320, 321; 620, 621).

10. The device according to one of claims 1 to 9, **characterized in that** the ring nozzle (220; 550) is arranged in a substantially cylindrical wall (225; 511) and the thermoplastic material is extruded in a substantially perpendicular direction relative to the wall (225; 511).

11. The device according to one of claims 1 to 10, **characterized in that** the preforming unit (200; 500) comprises two substantially torus shaped chambers (221, 222; 521, 522) connected by a connector nozzle (223; 523), where the thermoplastic material is introduced in a first of said chambers (221; 521) and where the ring nozzle (224; 524) to produce the ring-shaped preform (410) is connected to a second of said chambers (222; 522).

12. The device according to one of claims 1 to 11, **characterized in that** the preforming unit (200; 500) comprises a heater (230, 231; 560) for maintaining a temperature of the thermoplastic material.

13. The device according to one of claims 1 to 12, **characterized in that** the counterpart element (300, 400; 600, 400) comprises a carrier (310, 320; 610, 620) for holding a receptacle (400), such that the preform (410) is compressed against the receptacle (400), in particular for producing a liner, preferentially a gasket, in a closure.

14. The device according to one of claims 1 to 12, **characterized in that** the counterpart element is a mold form for forming a closure element having a continuous hole.

15. A method for producing a ring-shaped body from a thermoplastic material comprising the steps of
a) producing a ring-shaped preform (410) by extruding the melted thermoplastic material through a ring nozzle (220; 550);
b) stripping off the preform (410) from the ring nozzle (220; 550); and
c) forming the ring-shaped body by compressing the preform (410) against a counterpart element (300, 400; 600, 400) into a desired shape.

16. The method according to claim 15 further comprising the step of conveying the preform (410) into the counterpart element (300, 400; 600, 400).

17. The method according to claim 16 **characterized in that** a tool (110; 510) for stripping off and conveying the preform (410) and for forming the ring-shaped body is alternately moved from an upper dead center in which the ring-nozzle (220; 550) is uncovered by the tool (110; 510) such that the preform (410) is produced to a lower dead center in which the preform (410) is compressed.
